# EUROPEAN PATENT APPLICATION

(11) **EP 1 083 481 A2**
(43) Date of publication of application: **14.03.2001**
(21) Application number: 00119277.2
(22) Date of filing: 06.09.2000
(51) Int. Cl.: G06F 9/445

(54) **Computer and firmware writing method and apparatus thereof**

(30) Priority: 08.09.1999 JP 25372499
(71) Applicant: NEC CORPORATION, Tokyo (JP)
(72) Inventor: Mitsuki, Junko, Kumamoto-shi, Kumamoto (JP)
(74) Representative: Betten & Resch

(57) **Abstract**

A firmware writing apparatus (1, 10), according to the present invention, is comprised of a flash writer (1) and a microcomputer (10). The microcomputer (10) is made up of a CPU (4), a flash memory (8), a RAM (7), and a ROM (6) that is stored with a firmware loader (15) for loading a flash memory writing control program (12) into the said RAM (7). The flash writer (1) contains the said flash memory writing control program (12) that is executable by the said CPU (4) when it is loaded into the said RAM (7). With this structure, the said firmware loader (15) is executed by the said CPU (4) so as to load the said non-volatile memory writing control program (12) into the said RAM (7). Afterwards, the loaded said non-volatile memory writing control program (12) is executed by the said CPU (4) so as to receive data from the said flash writer (1) and then to write it in the said non-volatile memory (8). The said flash writer (1) is packaged independently of the said microcomputer (10).

## Description

### BACKGROUND OF THE INVENTION

### Field of the Invention

The present invention generally relates to a computer and firmware writing method and apparatus thereof. It particularly relates to improving firmware-writing methods used to control flash memory writing necessary for writing data in a non-volatile memory of a microcomputer.

### Description of the Related Arts

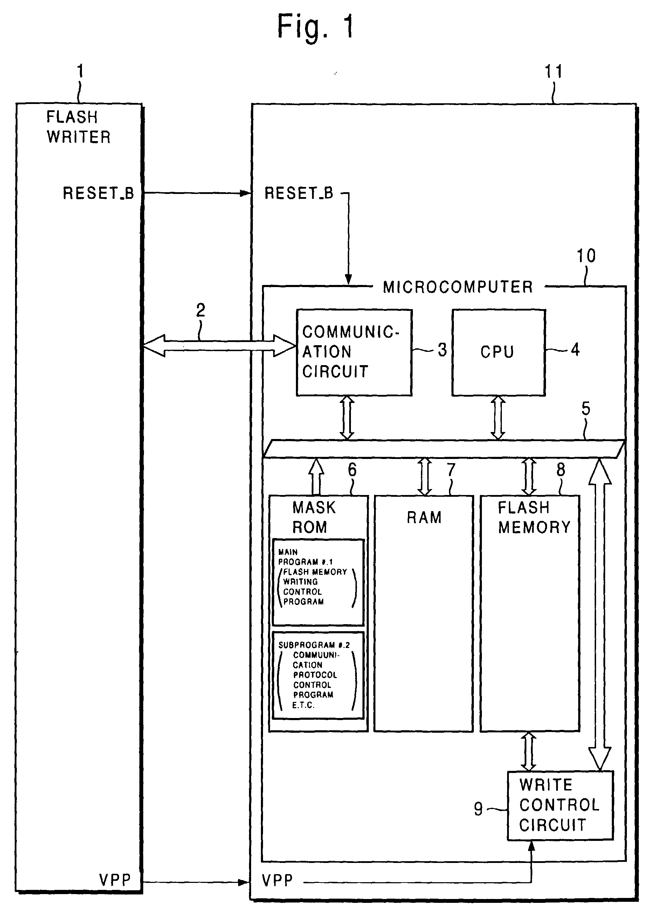

In microcomputers with internal flash memory, when writing is performed on the board which holds the CPU, RAM, ROM, etc., or during what is referred to as on-board writing, firmware is needed to interpret commands from the flash writer and control flash memory writing/erasing. The structure of a conventional example of this kind of microcomputer is shown in Fig. 1. According to this Figure, in mask ROM 6, the main program that includes programs controlling flash memory writing and the sub-program that contains programs such as those controlling communication protocol, etc. are pre-written. These main and sub-programs comprise firmware.

A microcomputer 10 which has been loaded with this firmware is packaged in the user board 11 comprising a communication circuit 3, CPU 4, mask ROM 6, RAM 7, flash memory 8, write control circuit 9, and bus lines 5 interconnecting them. The microcomputer 10 and flash writer 1, which contains functions for giving the various types of commands controlling flash memory, are connected through communication channel 2. This allows the firmware stored in the mask ROM 6 to write/erase data in flash memory 8 according to the command given by flash writer 1 through communication 2.

However, the first problem with these conventional techniques is that the firmware cannot be easily rewritten. This is because the contents of mask ROM 6 are set from the beforehand using a photo mask that fixes the bit pattern when the chips are manufactured. As a result, when the need for a firmware change arises, for example a bug is found, the mask must be revised and the chip remade, requiring a considerable amount of cost and processing.

A second problem is the increase in the size of chip surface area in order to accommodate the dedicated housing area used for pre-storing firmware in the mask ROM 6 within the chip. The third problem is firmware must be developed at an early stage. The reason for this is because the firmware is required before the ROM mask is constructed for the firmware to be housed in the in-chip mask ROM.

As referred to in Japanese Patent Application Laid-open No. Hei 6-44064, firmware is housed in flash memory inside the microprocessor. When rewriting that firmware, the new updating program is temporarily stored in SRAM (static RAM), and after the old program is deleted from flash memory, the new program inside SRAM is written into the flash memory. Accordingly, firmware can be easily updated.

However, this structure has a weak point similar to that of the second problem in the previously mentioned conventional technology wherein surface area of the chip is increased to accommodate the dedicated space (flash memory) used to house the firmware. Japanese Patent Application Laid-open No. Hei 10-116187 describes solutions to this weak point, and the structure shown in Figs. 2 and 3 is from this patent gazette.

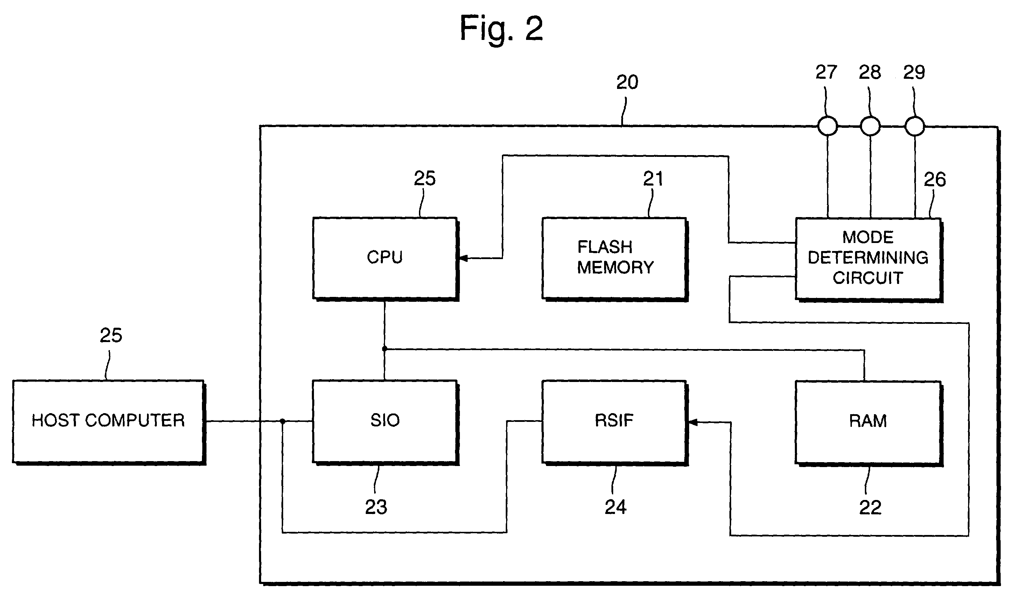

In Fig. 2, marker 20 refers to the microcomputer containing flash memory 21; 22 to the RAM inside microcomputer 20; 23 to the SIO (serial interface) in the microcomputer 20; and 30 to the external host computer.

In addition, marker 21 refers to flash memory in non-volatile memory form which houses data such as user programs; 27 through 29 to modal terminals in microcomputer 20; 26 to the mode determining circuit which determines chip mode based on the combination of electric voltages given to the modal terminals 27 through 29; 24 to RSIF (a program storage means) which receives the boot program (used to store the data such as user programs in flash memory 21) from the external host computer 30 and then stores this boot program in RAM 22 when the chip mode is determined to be RSIF mode by the mode determining circuit 26; and 25 to the CPU which receives data such as user programs via SIO 23 from the external host computer 30 and then stores it in flash memory 21 by executing the boot program stored in RAM 22 when the chip mode is determined to be flash mode by the mode determining circuit 26.

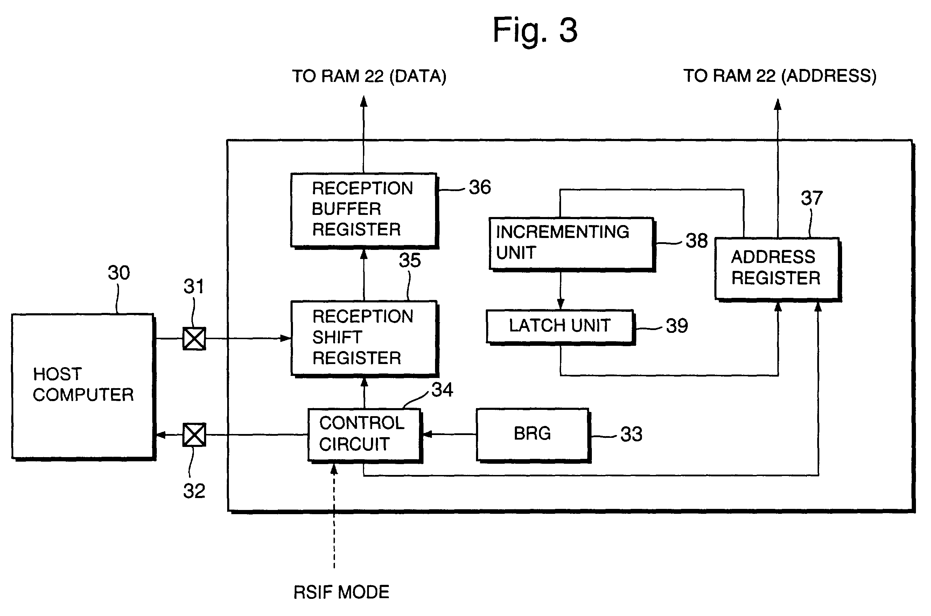

Figure 3 is a configuration diagram showing RSIF 24 in detail. In this Figure, markers 31 and 32 refer to external terminals connecting the host computer 30 to RSIF 24; 33 to the clock generator that generates a clock signal; 34 to the control circuit which controls the reception shift register 35, address register 37, etc. when the chip mode is determined to be RSIF mode by the mode determining circuit 26; 35 to the reception shift register that receives the boot program sent from the host computer 30 when the chip mode is determined to be RSIF mode by the mode determining circuit 26; and 36 to the reception buffer register which forwards one frame of data to the RAM 22 when the reception shift register 35 receives one frame of the data which forms the boot program.

In the same Figure, marker 37 refers to the address register that outputs the writing address in reception buffer register 36; 38 to the incrementing unit that increments the writing address stored in address register 37 whenever each frame of the data forming the boot program is received by the reception shift register 35; and 39 to the latch unit that is used to update the address value in address register 37 based on the output from the incrementing unit 38.

Next, the operation will be detailed. The user can freely have data such as user programs stored in the flash memory 21 of microcomputer 20. The process by which a user has data such as user programs stored in the flash memory 21 will now be explained.

The microcomputer 20 determines the chip mode based on the combination of electric voltages that are given to the modal terminals 27 through 29. In order to store the data such as user programs in the flash memory 21, the user first has chip mode set up to be RSIF mode. Once this is done, the mode determining circuit 26 decides that the chip mode has been set up to be RSIF mode and outputs that information to the RSIF 24 and CPU 25. Accordingly, the CPU 25 comes to halt but the RSIF 24 begins the processing necessary to forward the boot program from the host computer 30 to the RAM 22.

In other words, when the boot program with a WRITE command in the heading is sent from the external host computer 30 to the microcomputer 20 once the user has the chip mode set to be RSIF mode, the reception shift register 35 in the RSIF 24 receives the boot program headed by that WRITE command. More specifically, first the control circuit 34 distinguishes whether or not the reception shift register 35 has properly received the WRITE command heading. If normal reception has occurred, the control circuit 34 allows the reception shift register 35 to continue the process of receiving the boot program. On the other hand, if it has not, then the control circuit 34 sends error data to the host computer 30 letting the user know that an error has occurred.

If the WRITE command has been properly received, the reception shift register 35 then continues the process of receiving the boot program and upon reception of each frame of data forming the boot program, that frame of data is forwarded to the reception buffer register 36. Next, the reception buffer register 36 forwards to the RAM 22 each frame of data as it receives it.

When the boot program is stored in the RAM 22 in this fashion, the user can then have the chip mode set to be flash mode in order for the CPU 25 to execute the boot program beginning the process of storing data such as user programs in flash memory 21.

It is clear from the above explanation that:
a) it is unnecessary to keep a dedicated region in flash memory 21 which is pre-stored with a boot program; and
b) the entire area of flash memory 21 can be accordingly freed up to be used for user programming.
This is because the RSIF 24 is arranged separately from the CPU 25. That is to say, when the chip mode has been set to RSIF mode by the mode determining circuit 26, the RSIF 24 receives a boot program, which is provided for storing a user program, etc. into the flash memory 21, from the external host computer 30 and then stores it in RAM 22.

The technology described in the previously mentioned Japanese Patent Application Laid-open No. Hei 10-116187 has a weakness that specialized hardware such as a mode-setting circuit 26 used to set the mode called RSIF, setting terminals 27-29 used for that setting, and an RSIF circuit 24, which stores the boot program (i.e., the firmware for controlling the writing of flash memory) in RAM, must be mounted inside the microcomputer 20.

### SUMMARY OF THE INVENTION

Accordingly, the purpose of the present invention is to provide a computer and its firmware writing method and apparatus (e.g., a microcomputer system) with a reduced-capacity, non-volatile memory unit, without requiring specialized hardware on the microcomputer system.

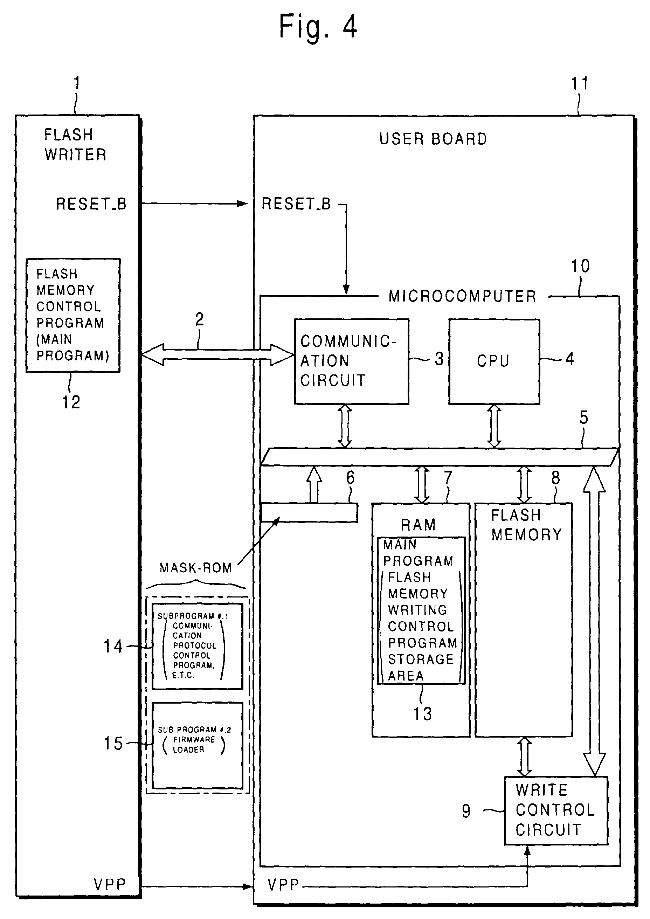

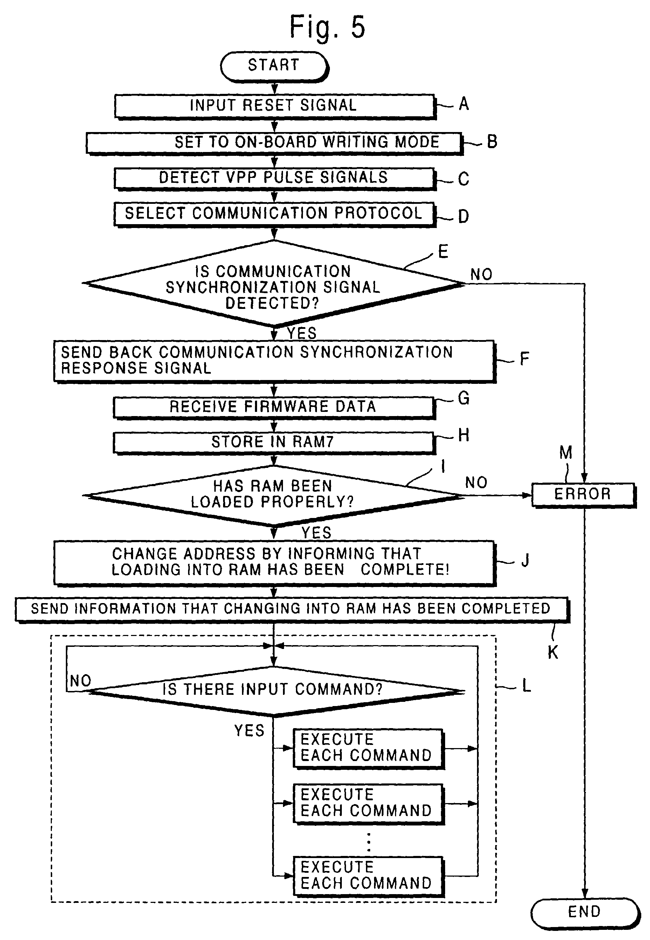

According to an aspect of the present invention, a firmware writing method is provided and is comprised of the steps of receiving and storing a non-volatile memory writing control program (12) in a RAM (7), wherein the non-volatile memory writing control program (12) is provided for receiving data from outside; writing the received said data in a non-volatile memory (8) of a computer (10); and reading out, interpreting, and executing the non-volatile memory writing control program stored in RAM (7) by a CPU (4), so as to receive the data from outside, write it in the non-volatile memory (8) of the computer (10). An example of this firmware writing method is shown in Figs. 4 and 5.

According to an aspect of the present invention, a computer with a non-volatile memory is provided and is comprised of ROM (6), which is stored with a loader (15) for loading a non-volatile memory writing control program (12) from outside, wherein the non-volatile memory writing control program (12) is provided for receiving data from outside, writing the received data in a non-volatile memory (8) of a computer (10); RAM (7), which is used to be stored with non-volatile memory writing control program (12) by executing the loader (15) in ROM (6); and a CPU (4), which executes the non-volatile memory writing control program (12) stored in RAM (7) so that the data is received from outside and then written in the non-volatile memory (8). An example of this computer is shown in Fig. 4.

According to an aspect of the present invention, a firmware writing apparatus is provided and is comprised of a microcomputer (10), which is made up of a CPU (4), a non-volatile memory (8), RAM (7), and ROM (6) that is stored with a firmware loader (15) for loading a non-volatile memory writing control program (12) into RAM (7); and a flash writer (1), which contains the non-volatile memory writing control program (12) that is executable by the CPU (4) when it is loaded in to RAM (7); wherein, the firmware loader (15) is executed by the CPU (4) so as to load the non-volatile memory writing control program (12) into RAM (7), and the loaded said non-volatile memory writing control program (12) is then executed by the CPU (4) so as to receive data from the flash writer (1) and then to write it in the non-volatile memory (8). An example of this firmware writing apparatus is shown in Fig. 4.

### BRIEF DESCRIPTION OF DRAWINGS

The above and other objects, features and advantages of the present invention will become more apparent from the following detailed description when taken in conjunction with the accompanying drawings, wherein:
Fig. 1 is a circuit block diagram showing an example of the conventional technique;
Fig. 2 is a circuit diagram showing another example of the conventional technique;
Fig. 3 shows a detailed part of the circuit in Fig. 2;
Fig. 4 shows the configuration of an embodiment of the present invention; and
Fig. 5 shows the operation of the embodiment of the present invention.

### DETAILED DESCRIPTION OF THE PREFERRED EMBODIMENTS

Next, an embodiment of the present invention is described while referencing the drawings. Figure 4 shows the structure of the embodiment with the elements in the structure identical to those in Fig. 1 being marked with the same reference numerals. As referred to in Fig. 4, this embodiment is comprised of a microcomputer 10, user board 11 on which the microprocessor 10 is fixed, and flash writer 1 that is stored with a flash memory writing control program (or main program) 12. This flash memory writing control program 12 is loaded into RAM 7 of the microcomputer 10 by CPU 4 executing communications protocol control program 14 and firmware loader 15 in mask ROM 6. Afterwards, the flash memory writing control program 12 is executed by the CPU 4 in the microcomputer 10. The flash memory writing control program 12 is provided for writing data in flash memory 8 of the microcomputer 10, reading it from the flash memory 8, or erasing it in conformity with a command issued by the flash writer 1. The data is kept in the flash writer 1, and loaded into the flash memory 8 through the CPU 4 executing the flash memory writing control program 12, which has been stored in RAM 7.

The microcomputer 10 is comprised of a CPU 4, mask ROM 6, RAM 7, flash memory 8, write control circuit 9 that controls the flash memory 8 to be written, and bus lines 5 interconnecting them. The flash writer 1 is connected to the microcomputer 10 via communication channel 2, flash writing voltage supply signal VPP, and reset signal RESET_B.

The difference between this embodiment and the conventional technology as shown in Fig. 1 is explained next. According to the example in Fig. 1, the mask ROM 6 is stored with firmware, which is made up of main program #1 including command executing programs and subprogram #2 including programs such as a communications protocol control program, etc.

On the other hand, according to an embodiment of the present invention, mask ROM 6 is stored with firmware, which is made up of subprogram #1 (14) including a communications protocol control program, etc. and subprogram #2 or firmware loader 15. However, the main program or flash memory writing control program 12 is stored in the flash writer 1.

With this arrangement, the flash writer 1 loads the flash memory writing control program 12 into the flash memory writing control program storage area (or main program storage area) 13 in the RAM 7. Afterwards, the transferred program 12 is read out, interpreted, and executed by CPU 4 so as to write data in the flash memory 8. In the mean time, that transferring of the program 12 to the RAM 7 is done by executing the subprograms #1 and #2, namely the communications protocol control program 14 and firmware loader 15 stored in the mask ROM 6.

Incidentally, the main program in the firmware contains many command executing subprograms for writing data in the flash memory, erasing it, verifying it (i.e., comparing a memory content to another), blank-checking it (i.e., determining whether the memory content is erased), etc. They occupy 90% of the firmware area and adversely affect the chip size. However, if that main program of firmware is stored in the external flash writer 1, according to this embodiment, instead of being stored in the memory inside the microcomputer 10, the mask ROM can be made with a smaller-capacity, namely one which is only 10 % the size of the mask ROM in Fig. 1.

Furthermore, changing the firmware in the conventional mask ROM 6 requires changing the photo masks used in ROM fabrication/diffusion processes. Accordingly, even if firmware needs to be modified, it is very difficult to change it after the chip housing the mask ROM 6 has been completed. According to this embodiment, this problem can be alleviated since the main program, which would occupy 90% of the firmware storage area, is not embedded inside the microcomputer 10. Therefore only subprogram #1 (14), which contains the communications protocol control program, etc. and subprogram #2 (15), which contains the firmware loader, are stored in mask ROM 6. With this configuration, the main program or the flash memory writing control program 12 is transferred from flash writer 1 to RAM 7 via communication channel 2.

The microcomputer 10 contains 8KB of RAM, which is commonly used as an internal program and data storage area. The usage of this area frees up the area in ROM 6 where the main program was conventionally stored and any new firmware that needs to be stored, can be since the RAM 7 is write-enabled.

In this embodiment, the mask ROM 6 needs to be stored with a new subprogram #2 (15) in addition to the conventional subprogram #1 (14). However, as detailed later, subprogram #2 (15) only contains a program for incrementing an address value that points at a corresponding address in RAM 7, then storing the main program in it. Therefore the area occupied by the subprogram # 2 (15) is very small, and only about 10% of the firmware is stored in the mask ROM 6.

Next, the operation of the embodiment is described in detail while referencing the flowchart in Fig. 5. As referred to in this Figure, upon reception of the rising edge of a reset signal RESET_B (= 0) from the flash writer 1, the microcomputer 10 allows the write control circuit 9 to detect the 10 V given to its VPP terminal (in step A). This detection leads the microcomputer 10 to go into onboard-writing mode (in step B).

Next, the flash writer 1 gives a predetermined number of pulse signals to the microcomputer 10. These pulse signals designate the communications protocol between the flash writer 1 and the microcomputer 10. Once the write control circuit 9 detects the pulse signals (in step C), the microcomputer 10 executes subprogram #1 (14) (i.e., communications protocol control program) so as to select the corresponding communications protocol (in step D). Accordingly, initial settings depending on which communications protocol is selected are made before the communication circuit 3 detects the synchronization signal coming from the flash writer 1 (in step E). If its detection is successfully made, the CPU 4 executes subprogram #1, which is stored in the mask ROM 6, so as to send a 'synchronized communication response' to the communication circuit 3. The communication circuit 3 then sends it to the flash writer 1 via the communication channel 2 (in step F). In step E, if the response is not detected, an error signal is sent back to the flash writer 1 (in step M) before the procedure is over.

Upon reception of the 'synchronized communication response' from the microcomputer 10, the flash writer 1 sends a 'firmware transmission notice' to the microcomputer 10 via the communication channel 2, and then the main program 12 to the microcomputer 10 (Step G). The main program 12 is received and stored in area 13 of the RAM 7 by the CPU 4 executing subprogram #2 (15) (i.e., the firmware loader) in the mask ROM 6 (Step H). In more detail, the address in the RAM 7 is incremented as the received main program is stored in the incremented address within the above area. This process is executed by the subprogram #2 (15).

After the storing of the main program has been completed, a 'RAM load test' is performed to determine whether or not the loading has been executed properly (Step I). If it has, then the main program 12 in RAM 7 starts being executed. This is done by a 'RAM loading complete' message, which is a software interrupt given to the CPU 4 so as to make the CPU 4 informed of the fact that the storing in the RAM has been completed (Step J). This software interrupt forces the CPU 4 to change the address currently being executed into one within the address region of the RAM 7. Conversely, in step I, if it is determined that this loading has not been executed properly, an error signal is sent to the flash writer 1 (Step M). The CPU 4 executes the main program in the RAM 7, sending 'RAM change over complete' message, which tells the flash writer 1 that the CPU 4 has changed the current execution into that on the main program basis or on the RAM basis. The firmware writing procedure is then complete (Step K). Afterwards, the main program that has been loaded into the RAM 7 is executed by the CPU 4 so as to store data in the flash memory 8 or clear it, which had been received from the flash writer 1 via the communication channel 2 according to an external command that is also sent from the flash writer 1 (in step L).

### [Results of the invention]

According to the present invention as described above, without the main program in the microcomputer, which may occupy approximately 90% of the firmware (e.g., 8 KB in the above embodiment), the main program is transferred and stored in the RAM of the microcomputer. Afterwards, the main program that has been stored in RAM is executed so as to perform in conformity with a variety of commands relevant to non-volatile memory or flash memory. This operation allows for a reduction in size of dedicated memory area for storing the main program, thus providing a smaller-sized chip. It is noted that the RAM that will be stored with an internal program and data is generally provided in the microcomputer.

Furthermore, according to the above operation and structure of the present invention, since the main program is transferred and stored in the RAM, the main program can be easily changed.

Furthermore, the schedule of developing the firmware or the main program is eased.

Furthermore, the embodiment as described above is comprised of the microcomputer 10. However, the present invention is not limited to this. Any other types of computers with a non-volatile memory and RAM can be naturally and alternatively used for the present invention.

A computer and its firmware writing method and apparatus, according to the present invention, has been described in connection with several preferred embodiments. It is to be understood that the subject matter encompassed by the present invention is not limited to that specified embodiment. On the contrary, it is intended to include as many alternatives, modifications, and equivalents as can be included.

## Claims

1. A firmware writing method, comprising:
receiving and storing a non-volatile memory writing control program (12) in a RAM (7), wherein said non-volatile memory writing control program (12) is provided for receiving data from outside, writing the received said data in a non-volatile memory (8) of a computer (10); and
reading out, interpreting, and executing said non-volatile memory writing control program stored in the said RAM (7) by a CPU (4), so as to receive the said data from outside, write it in the said non-volatile memory (8) of the said computer (10).

2. The firmware writing method according to claim 1, further comprising: selecting a communication protocol between said computer and a non-volatile memory writer (1), and communication-synchronizing between said computer and the non-volatile memory writer (1), which are executed before said receiving and storing said non-volatile memory writing control program (12) in a RAM (7) starts.

3. The firmware writing method, according to claim 1 or 2, wherein
said receiving and storing said non-volatile memory writing control program (12) in a RAM (7) is executed by the CPU (4) reading out, interpreting, and executing a firmware loader (15) stored in a ROM (6).

4. The firmware writing method according to claim 1, 2 or 3, wherein the said non-volatile memory is a flash memory.

5. The firmware writing method according to one of claims 1 to 4, wherein
said computer (10) is a microcomputer.

6. The firmware writing method according to one of claims 1 to 5, wherein
said non-volatile memory writing control program (12) is transferred from a non-volatile memory writer (1) and said outside is the non-volatile memory writer (1), too.

7. The firmware writing method according to claim 3, wherein
said ROM (6) is a mask ROM.

8. A computer with a non-volatile memory, comprising:
a ROM (6), which is stored with a loader (15) for loading a non-volatile memory writing control program (12) from outside, wherein the said non-volatile memory writing control program (12) is provided for receiving data from outside, writing the received said data in a non-volatile memory (8) of a computer (10);
a RAM (7), which is used to be stored with said non-volatile memory writing control program (12) by executing said loader (15) in the said ROM (6); and
a CPU (4), which executes said non-volatile memory writing control program (12) stored in the said RAM (7) so that said data is received from outside and then written in said non-volatile memory (8).

9. The computer according to claim 8, wherein said ROM (6) is further stored with a communication protocol control program (14) for selecting a communication protocol between said computer (10) and outside, and communication-synchronizing between said computer and outside; said communication protocol control program (14) is executed before said loader (15) in the said RAM (7) is executed.

10. The computer according to claim 8 or 9, wherein said non-volatile memory is a flash memory.

11. The computer according to claim 8, 9 or 10, wherein said computer (10) is a microcomputer.

12. The computer according to one of claims 8 to 11, wherein said ROM (6) is a mask ROM.

13. A firmware writing apparatus, comprising:
a microcomputer (10), which is comprised of a CPU (4), a non-volatile memory (8), a RAM (7), and a ROM (6) that is stored with a firmware loader (15) for loading a non-volatile memory writing control program (12) into said RAM (7); and
a flash writer (1), which contains said non-volatile memory writing control program (12) that is executable by the said CPU (4) when it is loaded into the said RAM (7);
therewith, said firmware loader (15) is executed by said CPU (4) so as to load the said non-volatile memory writing control program (12) into said RAM (7), and the loaded non-volatile memory writing control program (12) is then executed by said CPU (4)so as to receive data from said flash writer (1) and then to write it in said non-volatile memory (8).

14. The firmware writing apparatus according to claim 13, wherein the said flash writer (1) is packaged independently of
said microcomputer (10).
